# EUROPÄISCHE PATENTANMELDUNG

(11) **EP 1 378 480 A1**
(43) Veröffentlichungstag der Anmeldung: **07.01.2004**
(21) Anmeldenummer: 02014709.6
(22) Anmeldetag: 03.07.2002
(51) Int. Cl.: B66F 7/06, B62D 65/00

(54) **Transportfahrzeug zum Transport von Bauteilen**

(71) Anmelder: TMS Produktionssysteme GmbH, 4031 Linz (AT)
(72) Erfinder: Weiss, Lothar, 4050 Traun (AT)
(74) Vertreter: VA TECH Patente GmbH & Co

(57) **Zusammenfassung**

Transportfahrzeuge weisen in der Regel Hub- und Senkeinrichtungen auf, mittels denen Bauteile auf Aufnahmeeinrichtungen bei Bedarf, z.B. in Arbeitsstationen, abgesenkt bzw. angehoben werden können. Gängige Hub- und Senkeinrichtungen weisen jedoch den Nachteil auf, dass die Zugänglichkeit der Bauteile auf den Aufnahmeeinrichtungen erschwert wird oder die Positionierung der Aufnahmeeinrichtungen in der Arbeitsstation aufwendig ist. Die vorliegende Erfindung zeigt nun ein Transportfahrzeug mit einer Hub- und Senkeinrichtung die diese Nachteile behebt, indem die Konstruktionselemente der Hub- bzw. Senkeinrichtung in einer gehobenen oder gesenkten Position Y-förmig angeordnet sind.

## Beschreibung

Die vorliegende Erfindung betrifft ein Transportfahrzeug zum Transport von Bauteilen, vorzugsweise Fahrzeugkarosserien, bestehend aus zumindest einer Bewegungseinheit, zumindest einer Aufnahmeeinrichtung zur Aufnahme der Bauteile und zumindest einer Heb- bzw. Senkeinrichtung zum Heben und/oder Senken der Aufnahmeeinrichtung, welche aus einer Anzahl im Wesentlichen starrer Konstruktionselementen ausgebildet ist, die durch zumindest ein Gelenk miteinander verbunden sind.

Transportfahrzeuge mit einer Heb- bzw. Senkeinrichtung zum Heben und/oder Senken der Aufnahmeeinrichtung, die die Bauteile trägt sind in unterschiedlichsten Ausführungen bekannt.
Solche Transportfahrzeuge verwenden oftmals sogenannte Scherenmechanismen als Hub- bzw. Senkeinrichtung. Diese gibt es sowohl am Boden fahrend, als auch als Hängetisch an einem Transportfahrzeug, welches auf einem, an der Decke geführten, Schienensystem läuft. Aus der EP 1 106 563 A1 ist beispielsweise ein solches Transportfahrzeug bekannt, wobei die Heb- bzw. Senkeinrichtung als Seilscherenmechanismus ausgeführt ist, die aufwendige Seilführungen und zum Teil erhebliche Seillängen benötigen. Darüber hinaus ist die Stabilität gegenüber dem ungewollten seitlichen Ausweichen der Aufnahmeeinrichtung nicht in allen Fällen ausreichend. Zusätzlich benötigen diese Transportfahrzeuge aus konstruktiven Gründen eine Plattform mit entsprechender Größe die die Zugänglichkeit zum Transportgut erschwert.
Andere bekannte Heb- bzw. Senkeinrichtungen werden z.B. mit Teleskopsäulen, also mehrere ineinander geschobene Teleskoparme, ausgeführt, wie z.B. aus der AT 399 306 B bekannt. Im eingefahrenen Zustand der Teleskopsäule ist eine gewisse Mindestbauhöhe erforderlich, abhängig vom Hub und der Überdeckung der Teleskoparme. Ist diese nicht akzeptabel, ist eine größere Anzahl von ausschiebbaren Teleskoparmen erforderlich, was die Einrichtung verteuert. Aus Gründen der Zugänglichkeit für entsprechende Bearbeitungen befindet sich die Last meistens seitlich neben der Teleskopsäule und übt damit ein Biegemoment auf die Säule aus. Diese Lösung hat dadurch den Nachteil, dass bei Be- und Entlastung das Ende des Teileträgers durch die Biegung der vertikalen Säule und durch die unvermeidliche elastische Verformung der Bauteile nicht nur unterschiedlich geneigt wird, sondern auch horizontal verschoben wird, wodurch eine exakte Positionierung erschwert wird.

Die gegenständliche Erfindung hat sich deshalb die Aufgabe gestellt, ein Transportfahrzeug mit einer Hub- bzw. Senkeinrichtung anzugeben, das einfach und kompakt aufgebaut ist und einfach und kostengünstig hergestellt werden kann.

Diese Aufgabe wird erfindungsgemäß dadurch gelöst, dass zumindest zwei Konstruktionselemente der Heb- bzw. Senkeinrichtung zumindest in einer Hubposition Y-förmig angeordnet sind oder zumindest ein erstes Konstruktionselement der Heb- bzw. Senkeinrichtung als Führungseinrichtung ausgeführt ist, wobei zumindest ein vorbestimmbarer erster Punkt eines zweiten Konstruktionselementes in dieser Führungseinrichtung geführt bewegbar und drehbar gelagert angeordnet ist.
Damit erzielt man einen besonders einfachen und kompakte Aufbau des Transportfahrzeuges. Durch die geringe erforderliche Anzahl an Konstruktionselementen kann ein solches Transportfahrzeug auch sehr einfach und günstig hergestellt werden.

Vorteilhaft wird zumindest ein Konstruktionselement in einer Führungseinrichtung geführt bewegbar angeordnet, wobei die Führungseinrichtung an der Bewegungseinheit angeordnet ist, wodurch die Hubbewegung mit sehr einfachen konstruktiven Mitteln erzielt werden kann.

Eine Ausführung einer Hub- und Senkeinrichtung mit einem langen und einem kurzen Konstruktionselement, wobei das längere in der Führungseinrichtung geführt wird ist besonders einfach aufgebaut und kann sehr einfach hergestellt werden.
Ist das lange Konstruktionselement das geführte und auch noch doppelt so lange wie das kurze und ist das kurze in der Mitte des langen gelenkig gelagert, ergibt sich eine ausgesprochen vorteilhafte Ausführung eines Transportfahrzeuges, da dann sichergestellt ist, dass die Aufnahmeeinrichtung rein vertikal bewegt wird, wodurch eine einfache Positionierung der Aufnahmeeinrichtung ermöglicht wird.

Bei beliebigen Längenverhältnissen der Konstruktionselemente ist es besonders vorteilhaft, die Führungseinrichtung derart auszuführen, dass durch die Kinematik der Heb- bzw. Senkeinrichtung das mit der Aufnahmeeinrichtung verbundene Ende des Führungselementes im Wesentlichen vertikal bewegt wird. Durch diese besondere Gestaltung der Führungseinrichtungen kann eine horizontale Bewegung der Aufnahmeeinrichtung ausgeglichen werden, wodurch wiederum eine einfache Positionierung der Aufnahmeeinrichtung ermöglicht wird.

Bei einer Ausgestaltung der Hub- bzw. Senkeinrichtung mit zwei miteinander verbundenen mehrgliedrigen Gelenkrahmen und einem Führungselement, wobei die Gelenkrahmen vorzugsweise als Parallelogramm ausgeführt sind, ergeben sich ganz besondere Vorteile. Aufgrund der Kinematik einer solchen Vorrichtung wird nämlich sichergestellt, dass die Aufnahmeeinrichtung in allen Hebepositionen ihre ursprüngliche Lage bzgl. der Horizontalen beibehält und durch die Hubbewegung nicht verschwenkt wird.
Bei einem Längenverhältnis zwischen Führungselement und einem Konstruktionselement der Gelenkrahmen von 2:1 und einer gelenkigen Verbindung zwischen Gelenkrahmen und Führungselement in der Mitte des Führungselementes wird außerdem eine rein vertikale Bewegung der Aufnahmeeinrichtung gewährleistet.

Eine ganz besonders einfache Ausgestaltung ergibt sich, wenn die Heb- bzw. Senkeinrichtung mit zumindest einen mehrgliedrigen Gelenkrahmen, bestehend aus einer Anzahl gelenkig miteinander verbundener Konstruktionselemente, und einem Führungselement ausgeführt ist, wobei vorzugsweise das Führungselement gelenkig mit dem Gelenksrahmen verbunden ist. Bei dieser Ausgestaltung reicht ein Gelenkrahmen und ein Führungselement aus, um die erwünschte geführte Hubbewegung zu erzielen, dazu ist lediglich eine zweite Führungseinrichtung erforderlich, wodurch sich eine besonders einfache und günstige Konstruktion ergibt.

Die Konstruktionselemente, das Verbindungselement und/oder das Führungselement werden vorteilhaft aus Standardbauteilen, wie Rohren, Formrohren, oder Profilen, zumindest teilweise als Stäbe ausgeführt, was die Konstruktion wesentlich vereinfacht.

Vorteilhaft ist die Führungseinrichtung eine lineare Führung und an der Bewegungseinheit angeordnet, was die Auslegung der Kinematik und die Herstellung der Hub- bzw. Senkeinrichtung vereinfacht.

Um die Hub- bzw. Senkeinrichtung zu heben und senken ist in vorteilhafter Weise ein eigener Hubantrieb vorgesehen, der entweder an der Aufnahmeeinrichtung oder an einem Konstruktionselement der Hub- bzw. Senkeinrichtung angreifen kann. Wobei je nach Anwendung der geeignetste Antrieb und Angriffspunkt gewählt werden kann. Bei einem Angriffspunkt an der Aufnahmeeinrichtung selbst würde eine zusätzliche Verformung der Konstruktionselemente der Hub- bzw. Senkeinrichtung durch den Hubantrieb vermieden werden, wohingegen bei einem Angriffspunkt an einem Konstruktionselement der Hub- bzw. Senkeinrichtung eine noch kompaktere Konstruktion erzielbar werden könnte.
Der Hubantrieb kann je nach Bedarf als Seilantrieb, Kettenantrieb, Gewindestangenantrieb, Hydraulikzylinder oder Pneumatikzylinder ausgeführt sein.

In Fällen in denen besonders schwere Bauteile transportiert werden müssen, oder aus Platzgründen könnte in Transportrichtung zu beiden Seiten des Transportfahrzeuges zumindest je eine Hub- und Senkeinrichtung angeordnet sein.

Ein erfindungsgemäßes Transportfahrzeug lässt sich besonders vorteilhaft in einer Transportanlage zum Transport von Bauteilen, vorzugsweise Fahrzeugkarosserien, zwischen einer Mehrzahl von Stationen, vorzugsweise Fertigungsstationen, entlang einer Transportstrecke, entlang der mit einer Mehrzahl von Transportfahrzeugen eine Mehrzahl von Bauteilen transportierbar sind, einsetzen.

Eine solche Transportanlage kann als Hängebahn, vorzugsweise eine Elektrohängebahn, und das Transportfahrzeug als Hängebahnfahrzeug ausgeführt sein.
Bei einer solchen Anwendung können die Vorteile in ihrer Gesamtheit genutzt werden. Es wird eine gute Zugänglichkeit an das Transportgut von oben gefordert, dazu kann die Aufnahmeeinrichtung hakenförmig ausgebildet werden. Die gute Zugänglichkeit für Schweißoder Montageoperationen ergibt sich auch dadurch, dass entsprechend der Anlagenfunktion in den Montagebereichen die Last abgesenkt wird und damit aufgrund der Kinematik die Konstruktionselemente der Hub- bzw. Senkeinrichtung einem Manipulator nicht im Weg stehen. Lediglich in gehobener Stellung liegt sie quer über der Last, was keinen Nachteil darstellt, weil in dieser Stellung nur Transportaufgaben durchgeführt werden. Besonders beim nachträglichen Einbau des Transportmittels in bestehende Hallen ist die sich ergebende geringe Bauhöhe von großem Vorteil.

Eine weitere sehr günstige Anwendung ist eine bodengebundene Transportanlage mit einem bodengebundenen Transportfahrzeug, wobei sich im Wesentlichen die gleichen Vorteile wie oben ergeben.

Um eine Positionsgenaue Bearbeitung in einer Station, z.B. eine Schweißstation, sicherzustellen, ist die Aufnahmeeinrichtung bzw. der Bauteil vorteilhaft in einer Übergabeposition durch die Heb- bzw. Senkeinrichtung übergeb- bzw. übernembar, wobei in der Übergabeposition und/oder an der Aufnahmeeinrichtung bzw. am Bauteil zur Positionsbestimmung der Aufnahmeeinrichtung bzw. des Bauteils in der Station zumindest eine Zentriereinrichtung vorgesehen ist. Dadurch kann bereits durch die Hub- bzw. Senkbewegung die Position der Bauteile in der Station bestimmt werden, wodurch eine solche Transportanlage sehr einfach ausgeführt werden kann.
Dazu kann die Aufnahmeeinrichtung mit dem Bauteil zur Übergabe entweder vertikal, oder alternativ je nach Bedarf auch schräg oder kurvenförmig gehoben oder gesenkt werden.

Die gegenständliche Erfindung wird im folgenden anhand der beispielhaften, nicht einschränkenden, spezielle Ausführungsbeispiele zeigenden Figuren 1 bis 6 beschrieben. Dabei zeigt
Fig. 1 eine vorteilhafte Ausführung eines erfindungsgemäßen Transportfahrzeuges,
Fig. 2 bis 4 weitere vorteilhafte Ausführungen eines erfindungsgemäßen Transportfahrzeuges,
Fig. 5 eine Ausgestaltung eines Transportfahrzeuges als Fahrzeug einer Elektrohängebahn in zwei Hubpositionen und
Fig. 6 eine Ausgestaltung eines Transportfahrzeuges als bodengebundenes Fahrzeug in zwei Hubpositionen.

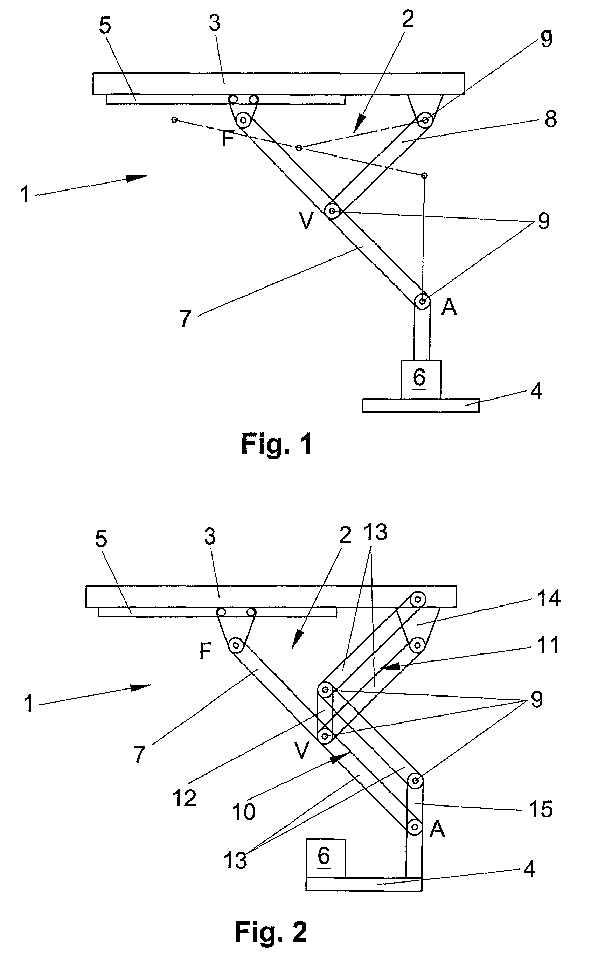

In Fig. 1 ist eine sehr einfache Ausgestaltung eines erfindungsgemäßen Transportfahrzeuges 1 dargestellt. Das Transportfahrzeuges 1 besteht dabei im Wesentlichen aus einer Bewegungseinheit 3, die in der Regel mit hier nicht dargestellten Einrichtungen zum Bewegen des Transportfahrzeuges 1, wie Räder, Rollen, Antriebe, Steuereinheiten, etc., ausgestattet ist, einer Hub- und Senkeinrichtung 2 und einer daran befestigten Aufnahmeeinrichtung 4 zur Aufnahme beliebiger Bauteile 6.
Die Hub- und Senkeinrichtung 2 besteht in diesem speziellen Beispiel aus zwei Konstruktionselementen 7, 8, hier Stäbe, die über ein Gelenk 9 drehbar miteinander verbunden sind. Der längere Stab ist hier als Führungselement 7 ausgeführt, dessen einer Führungseinrichtung 5 zugeordnetes Ende in dieser Führungseinrichtung 5 führbar bewegbar und drehbar gelagert ist. Dieses Ende des Führungselementes 7 ist über ein weiteres Gelenk 9 drehbar mit einem Element der Führungseinrichtung 5 verbunden und kann daher ausschließlich entlang einer durch die Führungseinrichtung 5 vorgegebenen Kurve bewegt werden, in diesem Beispiel eine lineare Führung. Das entgegengesetzte Ende des Führungselementes 7 ist mit der Aufnahmeeinrichtung 4 verbunden. Der kurze Stab 8 der Hub- und Senkeinrichtung 2 ist mit einem Ende über ein Gelenk 9 an der Bewegungseinheit 3 drehbar gelagert und mit dem anderen Ende wiederum über ein Gelenk 9 zwischen den beiden Enden des Führungselementes 7 am Führungselement 7 drehbar gelagert. In einer gehobenen bzw. gesenkten Position sind die Konstruktionselemente also Y-förmig angeordnet.
Die Längen des Stabes 8 und des Führungselementes 7 sind dabei so gewählt, dass das Führungselement 7 doppelt so lang ist, wie die Länge des kurzen Stabes 8 und der Verbindungspunkt V zwischen Führungselement 7 und dem kurzen Stab 8 ist genau in der Mitte des Führungselementes 7 gewählt. Aus dieser speziellen Gestaltung ergeben sich besondere kinematische Vorteile. Wie man sich kinematisch leicht überlegen kann, wird die Aufnahmeeinrichtung 4 bei dieser Anordnung bei einer Verschiebung des Führungspunktes F entlang der Führungseinrichtung 5 im Wesentlichen senkrecht gehoben oder abgesenkt und es kommt zu keiner horizontalen Verschiebung der Aufnahmeeinrichtung 4.
Bei einer starren Verbindung zwischen Führungselement 7 und Aufnahmeeinrichtung 4 würde sich lediglich die Aufnahmeeinrichtung 4 verschwenken, maximal um 90°. Diese Verschwenkung könnte man entweder als gegeben hinnehmen, oder man könnte auch einen gewissen Ausgleich der Lage der Aufnahmeeinrichtung 4 vorsehen. Z.B. könnten man eine drehbare Verbindung zwischen Führungselement 7 und Aufnahmeeinrichtung 4 vorsehen und die Verschwenkung durch eine geeignete Vorrichtung, wie z.B. ein Schrittmotor, Balancegewichte, oder ähnliches, ausgleichen, sodass immer eine erwünschte Lage, z.B. eine horizontale Lage, der Aufnahmeeinrichtung 4 gewährleistet ist.
Bei einer gelenkigen Verbindung zwischen Führungselement 7 und Aufnahmeeinrichtung 4, wie in Fig. 1 dargestellt, würde sich die Aufnahmeeinrichtung 4 natürlich so ausrichten, dass der Schwerpunkt der Aufnahmeeinrichtung 4 einschließlich dem Bauteil 6 auf einer senkrechten Linie durch den Aufnahmepunkt A zu liegen kommt. Ordnet man den Bauteil 6 auf der Aufnahmeeinrichtung 4 entsprechend an, so kann man sehr einfach eine horizontale Lage der Aufnahmeeinrichtung 4 erzwingen.
Natürlich könnten die Längenverhältnisse der Konstruktionselemente 7, 8 und die Lage des Verbindungspunktes V auch anders gewählt werden, wobei sich dann unter Umständen keine rein vertikale Bewegung des Aufnahmepunktes A mehr ergibt. Diese überlagerte horizontale Bewegung könnte man kinematisch jedoch z.B. durch eine geeignete Gestaltung der Führungskurve der Führungseinrichtung 5 ausgleichen. Die Auslegung eines solchen kinematischen Systems, wie eine Kulissensteuerung, gehört sicherlich in das Standardwissen eines entsprechenden Fachmannes und es wird daher nicht näher darauf eingegangen.
Ist hingegen das Ende des Stabes 8 an der Bewegungseinheit 3 in einer Führungseinrichtung 5 geführt und dafür das Führungselement 7 fest an der Bewegungseinrichtung 3 drehbar gelagert, dann ergäbe sich immer eine vertikale und horizontale Bewegung des Aufnahmepunktes A, hier natürlich eine kreisbogenförmige, die auch nicht ausgeglichen werden könnte. Eine solche Anordnung wäre jedoch natürlich genauso denkbar.
Es wäre aber natürlich auch denkbar beide Stäbe 7, 8 in einer Führungseinrichtung 5 zu führen.

Würde man den Aufnahmepunkt A mit dem Verbindungspunkt V zusammenfallen lassen, d.h. die Last würde direkt an der Verbindung der beiden Stäbe 7, 8 angreifen, so würde sich eine V-förmige Anordnung der Konstruktionselemente ergeben, die jedoch nur einen Extremfall der Y-förmigen Anordnung darstellt und daher in den Begriff Y-förmig subsumiert werden kann.

Die Fig. 2 zeigt nun eine weitere besondere Ausgestaltung der Hub- und Senkeinrichtung 2 eines Transportfahrzeuges 1. Bei diesem Beispiel ist wiederum ein Ende eines Führungselementes 7 über eine Führungseinrichtung 5 geführt bewegbar und drehbar gelagert. Dieses Führungselement 7 ist hier jedoch mit zwei Gelenkrahmen 10, 11 verbunden, die in diesem Beispiel je ein Parallelogramm, mit jeweils zwei parallelen Seiten, bilden, bzw. ist teilweise selbst Teil eines dieser Gelenkrahmen 10, 11. In einer gehobenen bzw. gesenkten Position sind die Konstruktionselemente wieder Y-förmig angeordnet.
Jeder der beiden Gelenkrahmen 10, 11 besteht hier aus zwei längeren Stäben 13 und zwei kürzeren Stäben 12, 14, 15 als Konstruktionselemente, die natürlich jeweils die gleiche Länge aufweisen müssen, um ein Parallelogramm bilden zu können. Ein erster Gelenkrahmen 10 ist über einen Stab 15 mit der Aufnahmeeinrichtung 4 verbunden bzw. wird der Stab 15 von der Aufnahmeeinrichtung 4 selbst gebildet. An diesen Stab 15 sind über Gelenke 9 zwei weitere Stäbe 13 drehbar gelagert angeordnet, die an der gegenüberliegenden Seite wiederum durch ein Verbindungselement 12, an dem die beiden Stäbe 13 wiederum drehbar gelagert sind, miteinander verbunden sind. Dabei bildet ein Teil des Führungselementes 7, im speziellen der Teil zwischen Verbindungspunkt V und der Verbindung mit der Aufnahmeeinrichtung 4, einen der beiden Stäbe 13. Das zweite Parallelogramm wird durch ein Konstruktionselement 14 gebildet, das hier als Teil der Bewegungseinheit 3 ausgebildet ist und an dem wieder zwei Stäbe 13 drehbar gelagert angeordnet sind, die am gegenüberliegenden Ende der Stäbe wiederum über das Verbindungselement 12 gelenkig verbunden sind. Die beiden so, über das Verbindungselement 12 verbundenen Gelenkrahmen 10, 11 sind über einen einzigen Verbindungspunkt V gelenkig mit dem Führungselement 7 verbunden. Wie bei der Ausführung nach Fig. 1 weist auch hier das Führungselement 7 die doppelte Länge wie die Stäbe 13 auf und der Verbindungspunkt V liegt wieder in der Mitte des Führungselementes 7. Aus der Kinematik dieses Anordnung ergibt sich, dass die Aufnahmeeinrichtung 4 bei einer Bewegung des Führungspunktes F wiederum ausschließlich vertikal bewegt wird und dass, aufgrund der beiden Gelenkrahmen 10, 11, zusätzlich die Aufnahmeeinrichtung 4 in allen Hubpositionen ihre vorgegebene horizontale Lage beibehält.
Werden die Längenverhältnisse der einzelnen Konstruktionselemente 7, 12, 13, 14, 15 der Gelenkrahmen 10, 11 und die Lage des Verbindungspunktes V anders gewählt, ergibt sich, wie bereits beschrieben, unter Umständen keine reine vertikale Bewegung des Aufnahmepunktes A mehr. Diese überlagerte horizontale Bewegung könnte man wieder kinematisch, z.B. durch eine geeignete Gestaltung der Führungskurve der Führungseinrichtung 5, ausgleichen.
Gleichfalls wäre es auch hier denkbar, ein anderes oder mehrere Konstruktionselement(e) in einer oder weiteren Führungseinrichtung(en) zu führen, wie oben bereits beschrieben.

Bei beiden oben beschriebenen Ausführungen wird die maximale erreichbare Hubhöhe durch die Länge des Führungselementes 7 vorgegeben, wobei der tatsächliche Hubbereich z.B. durch den Bewegungsspielraum des Führungspunktes F oder durch einen Hubantrieb eingestellt werden kann.

Selbstverständlich wäre es auch denkbar, neben der Führungseinrichtung 5 auch noch eine weitere Hilfsführung vorzusehen. Z.B. könnte der Aufnahmepunkt A in einer zusätzlichen vertikalen Hilfsführung oder der Verbindungspunkt V in einer zusätzlichen kreisförmigen Hilfsführung geführt werden, um die Genauigkeit zu erhöhen. Eine solche Hilfsführung würde die Kinematik der Hub- bzw. Senkeinrichtung 2 jedoch nicht verändern und wäre für die Funktion der Hub- bzw. Senkeinrichtung 2 nicht unbedingt erforderlich und ist daher im Sinne der Erfindung nicht als Führungseinrichtung 5 aufzufassen, die wesentlich die kinematischen Verhältnisse der Hub- bzw. Senkeinrichtung 2 bestimmt. Grundsätzlich könnte also jeder beliebige Punkt eines beliebigen Konstruktionselementes in einer Führungseinrichtung geführt werden, womit die Kinematik und die Funktion festgelegt wäre, wobei darüber hinaus beliebige weitere zusätzliche Hilfsführungen vorgesehen werden könnten, die die Kinematik jedoch nicht verändern würden, für die Funktion nicht unbedingt benötigt wären und lediglich eine unterstützende Wirkung hätten.

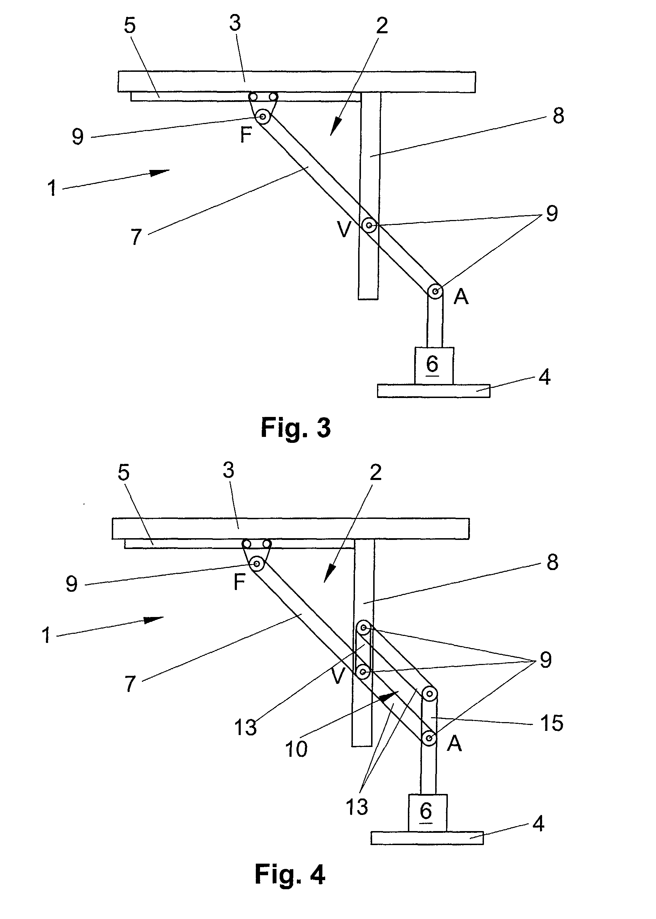

In der Fig. 3 wird nun einer weitere sehr einfache Ausgestaltung eines erfindungsgemäßen Transportfahrzeuges 1 dargestellt. In diesem Beispiel besteht die Hub- bzw. Senkeinrichtung 2 wiederum aus zwei Konstruktionselementen 7, 8, wobei hier eines als Stab 7 und das andere als vertikale Führungseinrichtung 8 ausgeführt ist. Der Stab 7 ist mit einem Ende F in einer horizontalen Führungseinrichtung 5 bewegbar geführt und drehbar gelagert und mit einem weiteren Punkt V, zwischen den beiden Enden des Stabes 7 in der vertikalen Führungseinrichtung 8 bewegbar geführt und drehbar gelagert. Beide Führungseinrichtungen 5, 8 sind dabei an der Bewegungseinheit 3 angeordnet. Aus der Kinematik kann sehr einfach entnommen werden, dass sich der Aufnahmepunkt A bei einer Hubbewegung hier entlang einer elliptischen Bahn bewegen würde. Durch eine entsprechende Gestaltung der Führungseinrichtung 5 und/oder der Führungseinrichtung 8 könnte man selbstverständlich wieder eine im Wesentlichen vertikale Bewegung der Aufnahmeeinrichtung 4 erreichen. Bezüglich einer eventuellen Verdrehung der Aufnahmeeinrichtung 4 beim Heben oder Senken gilt das bereits weiter oben gesagte.
Würde man den Aufnahmepunkt A und den Verbindungspunkt V in einem Punkt zusammenfallen lassen, also direkt den Aufnahmepunkt A in der vertikalen Führung 8 führen, so würde man sehr einfach eine vertikale Bewegung der Aufnahmeeinrichtung 4 erreichen.
Um eine kompaktere Bauweise zu erreichen, könnte die vertikale Führungseinrichtung 8 beispielsweise auch teleskopartig ausgeführt sein, d.h., dass die Führungseinrichtung 8, je nach Hubposition mehr oder weniger weit ausgefahren wird.

Das Transportfahrzeug 1 nach Fig. 3 ist in Fig. 4 nun wieder mit einem parallelförmigen Gelenkrahmen 10 ausgestattet. Im Gegensatz zur Ausführung nach Fig. 2 hier jedoch nur mit einem Gelenkrahmen 10. Der Gelenkrahmen 10 besteht wieder aus vier Konstruktionselementen 13, 14, 15, hier Stäbe, die über Gelenke 9 zu einem Parallelogramm miteinander verbunden sind. Einer der Stäbe 13 wird durch einen Teil des Führungselementes 7 gebildet. Dieses Führungselement 7 ist im Führungspunkt F in einer linearen horizontal angeordneten Führungseinrichtung 5 geführt bewegbar und drehbar gelagert. Am Verbindungspunkt V sind der Gelenkrahmen 10 und das Führungselement 7 gelenkig miteinander verbunden. Gleichzeitig wird der Verbindungspunkt V und ein weiterer Punkt des Gelenkrahmens 10 in einem zweiten linearen vertikal angeordneten als Führungseinrichtung 8 ausgebildeten Konstruktionselement der Hub- bzw. Senkeinrichtung 2 geführt bewegbar und drehbar gelagert. Wie schon bei Fig. 2 beschrieben, wird durch diesen Gelenkrahmen 10 erreicht, dass die Aufnahmeeinrichtung 4 ohne Verschwenken gehoben und gesenkt werden kann.

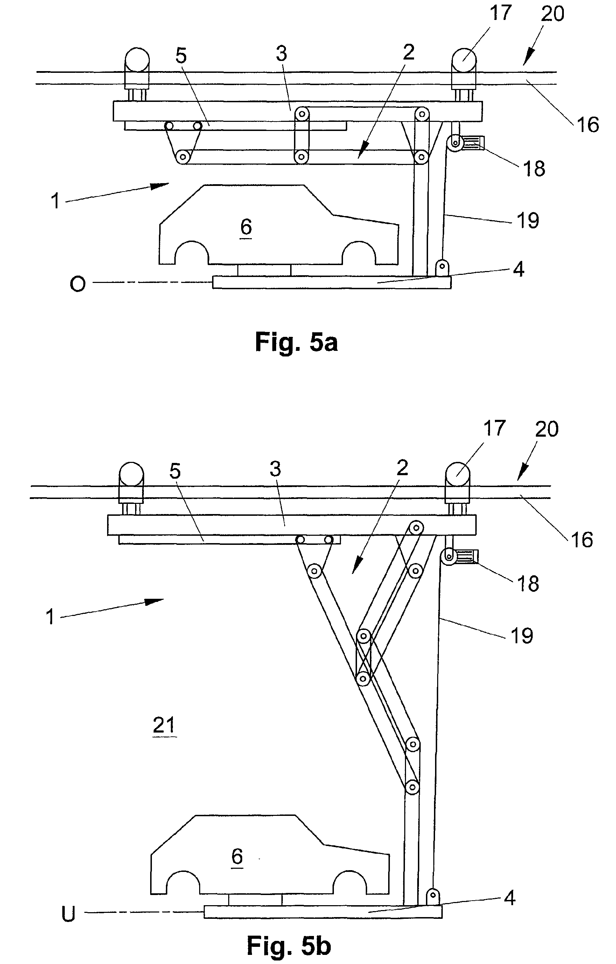

Die Ausgestaltung eines Transportfahrzeuges 1 als Fahrzeuges einer Elektrohängebahn ist in Fig. 5 dargestellt. Dabei weist die Bewegungseinheit 3 Räder bzw. Rollen 17 auf, die auf einer Führungsschiene 16 beweglich eingehängt sind und somit das Transportfahrzeug 1 entlang einer Transportstrecke 20, die durch die Führungsschiene 16 vorgegeben wird, bewegt werden kann. Dazu ist natürlich ein hinlänglich bekannter Antrieb, z.B, geschleppt oder selbstfahrend, erforderlich, der in Fig. 5 jedoch nicht dargestellt ist.
Die Fig. 5a zeigt nun das Transportfahrzeug 1 mit der Aufnahmeeinrichtung 4 in einer oberen Endlage O, d.h. die Hub- bzw. Senkeinrichtung 2 ist vollständig eingefahren und die Aufnahmeeinrichtung 4 hat ihre höchste Position erreicht. In dieser Ansicht erkennt man weiters die Kompaktheit des Transportfahrzeuges 1 mit der Hub- bzw. Senkeinrichtung 2, d.h. das Transportfahrzeug 1 benötigt nur sehr wenig Platz zum Transport z.B. einer Fahrzeugkarosserie als Bauteil 6.
Eine untere Endlage U der Aufnahmeeinrichtung 4 ist beispielhaft in Fig. 5b dargestellt. Das Transportfahrzeug 1 befindet sich hier z.B. in einer Arbeitsstation 21, wie beispielsweise eine Schweißstation, und die Aufnahmeeinrichtung 4 wurde abgesenkt, um den Bauteil 6 in der Arbeitsstation 21, gegebenenfalls zu einer Bearbeitung, abzusetzen. Natürlich sind auch alle Zwischenlagen möglich.
Zur Ausübung der Hubbewegung ist in diesem Beispiel an der Bewegungseinheit 3 ein Hubantrieb 18 vorgesehen, der über ein Seil oder eine Kette mit der Aufnahmeeinrichtung 4 verbunden ist. Über eine Seilwinde oder ein Kettenrad kann somit eine Hubbewegung erzeugt werden.

Natürlich könnte der Hubantrieb auch direkt auf das geführte Konstruktionselement wirken. Z.B. könnte die Führungseinrichtung 5 als Zahnstangenantrieb ausgeführt sein, mittels dem der Führungspunkt F direkt bewegt werden könnte, was bzgl. der Hubbewegung natürlich die gleiche Wirkung entfalten würde.

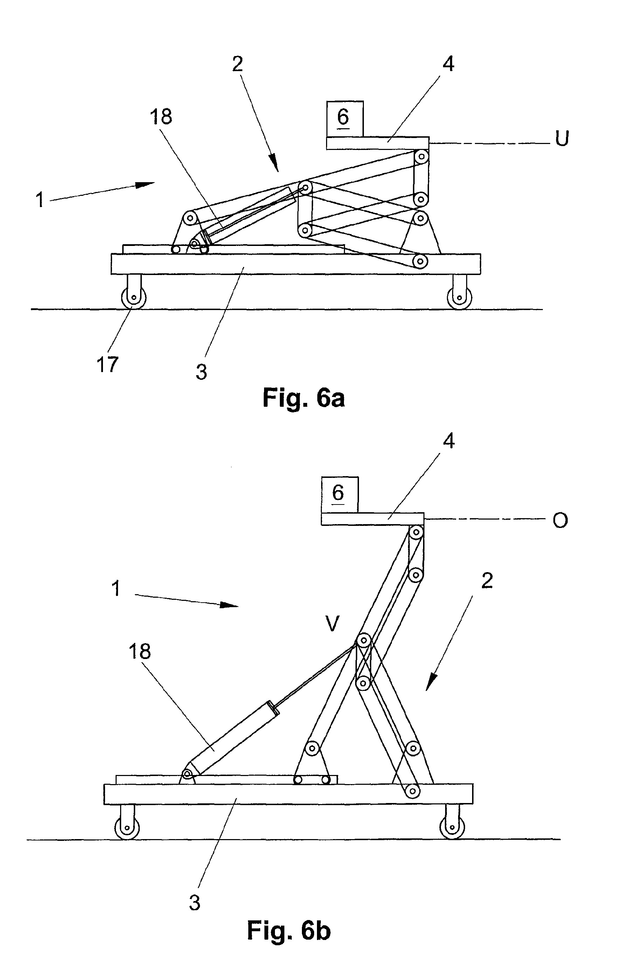

Ein bodengeführtes Transportfahrzeug 1 ist in Fig. 6 dargestellt. Bei diesem Fahrzeug weist die Bewegungseinheit 3 wiederum Räder oder Rollen 17, oder ähnliches, auf mittels denen das Transportfahrzeug 1 am Boden bewegt werden kann. Dazu könnten am Boden auch hinlänglich bekannte Führungs- oder Leitsysteme vorgesehen sein. Ein Bauteil 6 kann hier wiederum von einer unteren Endlage U, Fig. 6a, in eine obere Endlage O, Fig. 6b, gebracht werden. Natürlich sind auch alle Zwischenlagen möglich. Dazu ist als Hubantrieb 18 hier ein Pneumatik- oder Hydraulikzylinder an der Bewegungseinheit 3 vorgesehen, dessen beweglicher Kolben am Verbindungspunkt V der Hub- bzw. Senkeinrichtung 2 angreift.

Ein erfindungsgemäßes Transportfahrzeug 1 könnte auch mit mehr als einer Hub- bzw. Senkeinrichtung 2 ausgestattet sein. Es wäre z.B. denkbar in Fahrtrichtung des Transportfahrzeuges 1 auf beiden Seiten je eine oder mehr Hub- bzw. Senkeinrichtung 2 vorzusehen. Genauso wäre es auch denkbar die Hub- bzw. Senkeinrichtung 2 im Rahmen der Erfindung anders zu gestalten. Beispielsweise könnten zwei Stäbe 8, oder zwei Gelenkrahmen 10 und 11 vorgesehen werden zwischen denen das Führungselement 7 angeordnet ist. Eine solche Ausgestaltung hätte den Vorteil, dass diese aufgrund der symmetrischen Anordnung der Konstruktionselemente im Wesentlichen momentenfrei wäre. Aber es sind natürlich auch alle anderen mögliche kinematische Ausgestaltungen durch diese Erfindung umfasst.

Wenn in den obigen Ausführungen von der Länge eines Stabes oder Konstruktionselementes die Rede ist, dann ist damit natürlich der geradlinige Abstand zwischen den Drehpunkten zweier Gelenke zu verstehen. Wie weit die Konstruktionselemente über den Drehpunkt hinausragen ist nicht von Bedeutung.
Das Gleiche gilt auch für das Ende des Konstruktionselementes. Mit Ende ist nicht unbedingt das tatsächliche Ende des Konstruktionselementes zu verstehen, sondern man bezieht sich damit wiederum auf einen Drehpunkt. Das Konstruktionselement kann dabei natürlich über den Drehpunkt hinausragen.

Es können natürlich ohne Einschränkungen beliebige Konstruktionselemente, wie Stäbe, träger, Rohre, Formrohre, etc. verwendet werden, die natürlich auch beliebig geformt sein könnten, wie z.B. gerade, gekrümmt.

Ein Transportfahrzeug 1 wie oben beschrieben kann z.B. in Fertigungslinien der KFZ-Industrie zum Transport von Karosserien oder Karosserieteilen eingesetzt werden, z.B. als Hängebahn. Dabei werden eine Mehrzahl von Transportfahrzeugen 1 zwischen mehreren Arbeitsstationen 21, z.B. Schweißstationen, bewegt. Die Transportfahrzeuge 1 werden entlang einer an der Decke befestigten Schien bewegt, wofür die Bewegungseinheit 3 des Transportfahrzeuges 1 entsprechend ausgeführt sein muss. In den Arbeitsstationen 21 werden die Aufnahmeeinrichtungen 4 mit den Bauteilen 6 zur Bearbeitung abgesenkt. Durch die spezielle Kinematik der Hub- bzw. Senkeinrichtung 2 sind die Bauteile 6 auf der Aufnahmeeinrichtung 4 seitlich frei zugänglich und können daher ungehindert, z.B. von Schweißrobotern, bearbeitet werden.

Üblicherweise werden zur genauen Lagefixierung bei Übergaben bzw. Übernahme der Aufnahmeeinrichtungen 4 oder der Bauteile 6 von/an Bearbeitungsstationen und anderen Transportmitteln Zentriereinrichtungen, wie z.B. Führungszapfen oder Aufnahmezapfen, verwendet. Durch die geführte Bewegung, vorzugsweise eine rein vertikale Bewegung, können die Aufnahmeeinrichtungen 4 bzw. die Bauteile 6 einfach und sicher in die Zentriereinrichtungen gleiten. Bei dem vorliegenden erfindungsgemäßen Transportfahrzeug kommt es zu keinem seitlichen Ausweichen bei Änderung des Lastmoments, hervorgerufen durch die außermittige Last am Teileträger. Es tritt lediglich ein geringes Kippen, gemäß der Dehnung bzw. Verkürzung der Konstruktionselemente der Hub- bzw. Senkeinrichtung der Gelenksrahmen unter Änderung des Lastmomentes, auf. Dadurch kann es zu keiner Zwängung in Führungszapfen oder anderen Zentrierungen kommen, wodurch eine sichere Positionierung ermöglicht wird.

Zur Übergabe der Aufnahmeeinrichtung 4 bzw. des Bauteils 6 in einer Arbeitsstation 21 muss diese nicht unbedingt vertikal abgesenkt oder angehoben werden. Es könnten natürlich auch schräg angeordnete Zentriereinrichtungen vorgesehen werden, die dann eine entsprechende Übergabe der Aufnahmeeinrichtung 4 bei einer schrägen oder kurvenförmige Bewegung der Aufnahmeeinrichtung 4 zulassen würden.

Der Klappmechanismus der Hub- bzw. Senkeinrichtung 2 hat außerdem den Vorteil, dass auf einfache Weise Leitungen zur Versorgung, beispielsweise Strom, Wasser, Druckluft, etc., von Einrichtungen an der Aufnahmeeinrichtung, wie z.B. Spann- oder Schweißeinrichtungen, entlang den Konstruktionselementen geführt werden können, wobei diese nicht speziell geschützt werden müssen, da sich die Konstruktionselemente aufgrund der Kinematik nicht im Arbeitsbereich befinden und die Gefahr der Beschädigung der Leitungen daher gering ist.

Als Führungseinrichtungen können natürlich beliebige, hinlänglich bekannte und hier daher nicht eigens beschriebene Konstruktionen eingesetzt werden, wie z.B. ein Zapfen, ein Schlitten oder eine Rolle, die in einer entsprechenden Schiene geführt werden, oder auch eine Gleitstangenführung, Kulissenführung, etc.

## Patentansprüche

1. Transportfahrzeug zum Transport von Bauteilen (6), vorzugsweise Fahrzeugkarosserien, bestehend aus zumindest einer Bewegungseinheit (3), zumindest einer Aufnahmeeinrichtung (4) zur Aufnahme der Bauteile (6) und zumindest einer Heb- bzw. Senkeinrichtung (2) zum Heben und/oder Senken der Aufnahmeeinrichtung (4), welche eine Anzahl im Wesentlichen starrer, vorzugsweise langgestreckter, Konstruktionselemente (7, 8) aufweist, die durch zumindest ein Gelenk (9) miteinander verbunden sind, **dadurch gekennzeichnet, dass** zumindest zwei Konstruktionselemente (7, 8) der Heb- bzw. Senkeinrichtung (2) zumindest in einer Hubposition Y-förmig angeordnet sind.

2. Transportfahrzeug nach Anspruch 1, **dadurch gekennzeichnet, dass** ein Ende eines ersten Konstruktionselementes (8) an der Bewegungseinheit (3) drehbar gelagert angeordnet ist und das andere Ende dieses Konstruktionselementes (8) zwischen den beiden Enden des zweiten Konstruktionselementes (7) an diesem drehbar gelagert angeordnet ist.

3. Transportfahrzeug nach Anspruch 1 oder 2, **dadurch gekennzeichnet, dass** zumindest ein Konstruktionselement (7, 8) in einer Führungseinrichtung (5) geführt bewegbar und drehbar angeordnet ist.

4. Transportfahrzeug nach einem der Ansprüch 1 bis 3, **dadurch gekennzeichnet, dass** ein erstes Konstruktionselement (7) als Führungselement ausgeführt ist, wobei ein Ende dieses Führungselementes (7) in der Führungseinrichtung (5) beweglich und drehbar gelagert angeordnet ist und das andere Ende des Führungselementes (7) mit der Aufnahmeeinrichtung (4) und/oder mit einem zweiten Konstruktionselement (8) verbunden ist.

5. Transportfahrzeug nach einem der Ansprüche 1 bis 4, **dadurch gekennzeichnet, dass** eines der Konstruktionselemente (7, 8) länger als das andere Konstruktionselement ausgeführt ist.

6. Transportfahrzeug nach Anspruch 5, **dadurch gekennzeichnet, dass** das lange Konstruktionselement im Wesentlichen die doppelte Länge des kurzen Konstruktionselementes aufweist.

7. Transportfahrzeug nach Anspruch 5 oder 6, **dadurch gekennzeichnet, dass** das kurze Konstruktionselement im Wesentlich in der Mitte des langen Konstruktionselementes mit dem langen Konstruktionselement gelenkig verbunden ist.

8. Transportfahrzeug nach einem der Ansprüche 5 bis 7, **dadurch gekennzeichnet, dass** das Führungselement (7) das lange Konstruktionselement ist.

9. Transportfahrzeug nach einem der Ansprüche 3 bis 8, **dadurch gekennzeichnet, dass** die Führungseinrichtung (5) derart ausgeführt ist, dass durch die Kinematik der Heb- bzw. Senkeinrichtung (2) das mit der Aufnahmeeinrichtung (4) verbundene Ende des Führungselementes (7) im Wesentlichen vertikal bewegbar ist.

10. Transportfahrzeug nach Anspruch 1 oder 2, **dadurch gekennzeichnet, dass** die Heb- bzw. Senkeinrichtung (2) mit zumindest zwei miteinander verbundenen mehrgliedrigen Gelenkrahmen (10, 11), bestehend aus einer Anzahl gelenkig miteinander verbundener Konstruktionselemente (12, 13), und einem Führungselement (7) ausgeführt ist.

11. Transportfahrzeug nach Anspruch 10, **dadurch gekennzeichnet, dass** zumindest einer, vorzugsweise beide, der mehrgliedrigen Gelenkrahmen (10, 11) als Parallelogramm, bestehend aus vier gelenkig miteinander verbundenen Konstruktionselementen (12, 13, 14, 15), von welchem jeweils zwei Konstruktionselemente (13, 12 und 15, 12 und 14) in allen Positionen im Wesentlichen parallel angeordnet sind, ausgeführt ist.

12. Transportfahrzeug nach Anspruch 10 oder 11, **dadurch gekennzeichnet, dass** ein Konstruktionselement des ersten Gelenkrahmens gleichzeitig auch ein Konstruktionselement des zweiten Gelenkrahmens ist und dieses Verbindungselement (12) die Verbindung zwischen den beiden Gelenkrahmen (10,11) bildet.

13. Transportfahrzeug nach Anspruch 12, **dadurch gekennzeichnet, dass** ein Konstruktionselement (14) starr mit der Bewegungseinheit (3) verbunden ist bzw. von der Bewegungseinheit (3) gebildet wird und an diesem Konstruktionselement (14) die Enden zweier weiterer Konstruktionselemente (13) drehbar gelagert angeordnet sind, wobei die beiden anderen Enden dieser Konstruktionselemente (13) am Verbindungselement (12) drehbar gelagert angeordnet sind und diese vier Konstruktionselemente (12, 13, 14) einen ersten Gelenkrahmen (11) bilden.

14. Transportfahrzeug nach Anspruch 12 oder 13, **dadurch gekennzeichnet, dass** ein Konstruktionselement (15) starr mit der Aufnahmeeinrichtung (4) verbunden ist bzw. von der Aufnahmeeinrichtung (4) gebildet wird und an diesem Konstruktionselement (15) die Enden zweier weiterer Konstruktionselemente (13) drehbar gelagert angeordnet sind, wobei die beiden anderen Enden dieser Konstruktionselemente (13) am Verbindungselement (12) drehbar gelagert angeordnet sind und diese vier Konstruktionselemente (12, 13, 15) einen zweiten Gelenkrahmen (10) bilden.

15. Transportfahrzeug nach einem der Ansprüche 10 bis 14, **dadurch gekennzeichnet, dass** ein Ende des Führungselementes (7) in der Führungseinrichtung (5) geführt bewegbar und drehbar angeordnet ist und das andere Ende des Führungselementes (7) mit einem Konstruktionselement (12, 13) eines Gelenkrahmens (10, 11) bzw. mit der Aufnahmeeinrichtung (4) verbunden ist.

16. Transportfahrzeug nach Anspruch 15, **dadurch gekennzeichnet, dass** das Führungselement (7) gleichzeitig zumindest teilweise ein Konstruktionselement (13) eines Gelenkrahmens (10, 11) ist.

17. Transportfahrzeug nach einem der Ansprüche 10 bis 16, **dadurch gekennzeichnet, dass** das Führungselement (7) länger als das längste Konstruktionselement der beiden Gelenkrahmen (10, 11) ausgeführt ist.

18. Transportfahrzeug nach Anspruch 17, **dadurch gekennzeichnet, dass** das Führungselement (7) doppelt so lang wie das längste Konstruktionselement des Gelenkrahmens (10, 11) ausgeführt ist.

19. Transportfahrzeug nach einem der Ansprüche 16 bis 18, **dadurch gekennzeichnet, dass** ein Ende des Verbindungselementes (12) zwischen den beiden Enden des Führungselementes (7) am Führungselement (7) drehbar gelagert angeordnet ist.

20. Transportfahrzeug nach Anspruch 19, **dadurch gekennzeichnet, dass** ein Ende des Verbindungselementes (12) zwischen den beiden Enden im Wesentlichen in der Mitte des Führungselementes (7) am Führungselement (7) drehbar gelagert angeordnet ist.

21. Transportfahrzeug nach einem der Ansprüche 1 bis 20, **dadurch gekennzeichnet, dass** die Konstruktionselemente (13, 14, 15), das Verbindungselement (12) und/oder das Führungselement (7) zumindest teilweise als Stäbe ausgeführt sind, die vorzugsweise aus Rohren, Formrohren, oder Profilen gebildet sind.

22. Transportfahrzeug zum Transport von Bauteilen (6), vorzugsweise Fahrzeugkarosserien, bestehend aus zumindest einer Bewegungseinheit (3), zumindest einer Aufnahmeeinrichtung (4) zur Aufnahme der Bauteile (6) und zumindest einer Heb- bzw. Senkeinrichtung (2) zum Heben und/oder Senken der Aufnahmeeinrichtung (4), welche eine Anzahl im Wesentlichen starrer, vorzugsweise langgestreckter, Konstruktionselemente (7, 8) aufweist, die durch zumindest ein Gelenk (9) miteinander verbunden sind, **dadurch gekennzeichnet, dass** zumindest ein erstes Konstruktionselement (8) der Heb- bzw. Senkeinrichtung als Führungseinrichtung ausgeführt ist, wobei zumindest ein vorbestimmbarer erster Punkt (V) eines zweiten als Führungselement vorgesehenen Konstruktionselementes (7) in dieser Führungseinrichtung (8) geführt bewegbar und drehbar gelagert angeordnet ist.

23. Transportfahrzeug nach Anspruch 22, **dadurch gekennzeichnet, dass** die Heb- bzw. Senkeinrichtung (2) mit zumindest einen mehrgliedrigen Gelenkrahmen (10), bestehend aus einer Anzahl gelenkig miteinander verbundener Konstruktionselemente (13), und einem Führungselement (7) ausgeführt ist, wobei das Führungselement (7) gegebenenfalls Teil des Gelenkrahmens (10) ist.

24. Transportfahrzeug nach Anspruch 23, **dadurch gekennzeichnet, dass** das Führungselement (7) gelenkig mit dem Gelenksrahmen (10) verbunden ist.

25. Transportfahrzeug nach Anspruch 22, 23 oder 24, **dadurch gekennzeichnet, dass** ein vorbestimmbarer zweiter Punkt (F) des Führungselementes (7) in einer zweiten Führungseinrichtung (5) geführt bewegbar und drehbar gelagert angeordnet ist.

26. Transportfahrzeug nach einem der Ansprüche 22 bis 25, **dadurch gekennzeichnet, dass** das Führungselement (7) und/oder der Gelenkrahmen (10) mit der Aufnahmeeinrichtung (4) verbunden ist.

27. Transportfahrzeug nach einem der Ansprüche 22 bis 26, **dadurch gekennzeichnet, dass** eine erste Führungseinrichtung (5, 8) im Wesentlichen horizontal oder schräg und eine zweite Führungseinrichtung (5, 8) im Wesentlichen vertikal oder schräg ausgerichtet ist.

28. Transportfahrzeug nach einem der Ansprüche 1 bis 27, **dadurch gekennzeichnet, dass** die Führungseinrichtungen (5, 8) an der Bewegungseinheit (3) angeordnet sind.

29. Transportfahrzeug nach einem der Ansprüche 1 bis 28, **dadurch gekennzeichnet, dass** die Führungseinrichtungen (5, 8) zumindest teilweise als lineare Führung ausgeführt sind.

30. Transportfahrzeug nach einem der Ansprüche 1 bis 29, **dadurch gekennzeichnet, dass** die Bewegungseinheit (3) mit Einrichtungen zum Bewegen des Transportfahrzeuges (1), beispielsweise Räder, Rollen, Antriebe, Steuereinheiten, etc., ausgestattet ist.

31. Transportfahrzeug nach einem der Ansprüche 1 bis 30, **dadurch gekennzeichnet, dass** zumindest ein Hubantrieb (18) vorgesehen ist, mittels dem die Hub- bzw. Senkeinrichtung (2) heb- und senkbar ist.

32. Transportfahrzeug nach Anspruch 31, **dadurch gekennzeichnet, dass** der Hubantrieb (18) an der Aufnahmeeinrichtung (4) angreift.

33. Transportfahrzeug nach Anspruch 31, **dadurch gekennzeichnet, dass** der Hubantrieb (18) an zumindest einem Konstruktionselement (7, 12, 13, 14, 15) bzw. einer Verbindung zweier Konstruktionselemente der Hub- bzw. Senkeinrichtung (2) angreift.

34. Transportfahrzeug nach einem der Ansprüche 31 bis 33, **dadurch gekennzeichnet, dass** der Hubantrieb (18) als Seilantrieb, Kettenantrieb, Gewindestangenantrieb, Zahnstangenantrieb, Hydraulikzylinder oder Pneumatikzylinder ausgeführt ist.

35. Transportfahrzeug nach einem der Ansprüche 1 bis 34, **dadurch gekennzeichnet, dass** in Transportrichtung zu beiden Seiten des Transportfahrzeuges (1) zumindest je eine Hub- und Senkeinrichtung (2) angeordnet ist.

36. Transportfahrzeug nach einem der Ansprüche 1 bis 35, **dadurch gekennzeichnet, dass** das Transportfahrzeug (1) als Fahrzeug einer Hängebahn, vorzugsweise eine Elektrohängebahn ausgeführt ist, wobei die Bewegungseinheit über geeignete Einrichtungen an einem über dem Boden angeordneten Führungssystem (16) bewegbar ist.

37. Transportfahrzeug nach einem der Ansprüche 1 bis 36, **dadurch gekennzeichnet, dass** das Transportfahrzeug (1) als Bodenfahrzeug, beispielsweise ein Skid, ausgeführt ist, wobei die Bewegungseinheit (3) selbstfahrend oder fremdgetrieben am Boden bewegbar ist.

38. Transportanlage zum Transport von Bauteilen (6), vorzugsweise Fahrzeugkarosserien, zwischen einer Mehrzahl von Stationen (21), vorzugsweise Fertigungsstationen, entlang einer Transportstrecke (20), entlang der mit einer Mehrzahl von Transportfahrzeugen (1) eine Mehrzahl von Bauteilen (6) transportierbar sind, wobei die Transportfahrzeuge (1) nach einem der Anspruch 1 bis 31 ausgebildet sind.

39. Transportanlage nach Anspruch 38, **dadurch gekennzeichnet, dass** die Transportanlage als Hängebahn, vorzugsweise eine Elektrohängebahn, und das Transportfahrzeug (1) als Hängebahnfahrzeug ausgeführt ist.

40. Transportanlage nach Anspruch 38, **dadurch gekennzeichnet, dass** die Transportanlage als bodengebundene Transportanlage und das Transportfahrzeug (1) als bodengebundenes Transportfahrzeug ausgeführt ist.

41. Transportanlage nach einem der Ansprüche 38 bis 40, **dadurch gekennzeichnet, dass** die Aufnahmeeinrichtung (4) oder der Bauteil (6) in zumindest einer Station (21) in einer Übergabeposition durch die Heb- bzw. Senkeinrichtung (2) übergeb- bzw. übernehmbar ist, wobei in der Übergabeposition und/oder an der Aufnahmeeinrichtung (4) bzw. am Bauteil (6) zur Positionsbestimmung der Aufnahmeeinrichtung (4) bzw. des Bauteils (6) in der Station (21) zumindest eine Zentriereinrichtung vorgesehen ist.

42. Transportanlage nach Anspruch 41, **dadurch gekennzeichnet, dass** die Aufnahmeeinrichtung (4) bzw. der Bauteil (6) zur Übergabe bzw. Übernahme im Wesentlichen vertikal heb- bzw. senkbar ist und die Zentriereinrichtung entsprechend vertikal ausgerichtet ist.

43. Transportanlage nach Anspruch 41, **dadurch gekennzeichnet, dass** die Aufnahmeeinrichtung(4) bzw. der Bauteil (6) zur Übergabe bzw. Übernahme im Wesentlichen schräg bzw, kurvenförmig heb- bzw. senkbar ist und die Zentriereinrichtung ebenfalls entsprechend schräg ausgerichtet ist.
